# EUROPÄISCHE PATENTANMELDUNG

(11) **EP 4 300 667 A1**
(43) Veröffentlichungstag der Anmeldung: **03.01.2024**
(21) Anmeldenummer: 22182597.9
(22) Anmeldetag: 01.07.2022
(51) Int. Cl.: H01M 50/119, H01M 50/103, H01M 50/133, H01M 50/136

(54) **BATTERIEZELLGEHÄUSE UND VERFAHREN ZUR HERSTELLUNG**

(71) Anmelder: Speira GmbH, 41515 Grevenbroich (DE)
(72) Erfinder: Dr. LENTZ, Martin Christoph, 53123 Bonn (DE); ARETZ, Holger, 53359 Rheinbach (DE); Dr. JANSSEN, Hartmut, 40724 Hilden (DE)
(74) Vertreter: Cohausz & Florack

(57) **Zusammenfassung**

Die Erfindung betrifft ein Batteriezellgehäuse sowie ein Verfahren zur Herstellung eines erfindungsgemäßen Batteriezellgehäuses. Die Aufgabe der vorliegenden Erfindung, ein Batteriezellgehäuse mit einem Batteriezellgehäusemantel (1) mit zumindest bereichsweise rechteckigem Querschnitt anzugeben, welches sehr einfach gefertigt werden kann und gleichzeitig den Einsatz einer großen Breite an Aluminiumlegierungen zulässt, um auf unterschiedliche Anforderungen des Batteriezellgehäuses, beispielsweise erhöhte Festigkeitsanforderungen oder Wärmeleitfähigkeitsanforderungen, flexibel reagieren zu können, wird dadurch gelöst, dass das Batteriezellgehäuse einen rollgeformten Rohrkörper aus einer Aluminiumlegierung als Batteriezellgehäusemantel (1) aufweist, wobei der Batteriezellgehäusemantel (1) in Längsrichtung gefügt ist und zumindest bereichsweise einen rechteckigen Querschnitt aufweist, wobei der Batteriezellgehäusemantel (1) vorzugsweise aus einem Aluminiumlegierungsband (2) rollgeformt ist.

## Beschreibung

Die Erfindung betrifft ein Batteriezellgehäuse sowie ein Verfahren zur Herstellung eines Batteriezellgehäuses.

Batteriezellgehäuse werden in unterschiedlichsten Formen hergestellt. Neben der Pouch-Form und dem zylindrischen Batteriezellgehäuse findet auch ein prismatisches Batteriezellgehäuse häufig Anwendung. Prismatische Batteriezellgehäuse bestehen aus einem Batteriezellgehäusemantel, welcher einen im Wesentlichen rechteckigen Querschnitt aufweist und somit eine einfache und platzsparende Anordnung von Batteriezellen ermöglicht. Prismatische Batteriezellgehäuse weisen einen Batteriezellgehäuseboden sowie einen Batteriezellgehäusedeckel mit Mitteln zum Kontaktieren der beiden elektrischen Pole der Batteriezelle auf.

Derzeit werden prismatische Batteriezellgehäuse in Form von prismatischen Bechern überwiegend durch kombinierte Tiefzieh-Abstreck-Prozesse mit einer Vielzahl von Ziehstufen aus einem Blechzuschnitt aus einem Aluminiumlegierungsband hergestellt. Aufgrund der Vielzahl von Ziehstufen in dem Herstellungsverfahren können nur besonders gut tiefziehfähige Aluminiumlegierungen zur Herstellung des Gehäuses eingesetzt werden. Die Vielzahl an Ziehstufen erhöhen die Kosten des Verfahrens.

Alternativ hierzu kann auch ein Fließpressen verwendet werden. Das Fließpressen funktioniert am besten mit weichen Aluminiumlegierungen. Aluminiumlegierungen mit höherer Festigkeit führen zu erhöhten Presskräften und verringern die Produktivität. Weiche Aluminiumlegierungen haben den Nachteil, dass sie weniger geeignet sind, die Festigkeitsanforderungen des Batteriezellgehäuses bei geringem Gewicht zu erzielen.

Aus der US-Patentanmeldung US 2022/0102787 A1 ist ein Batteriezellgehäuse bekannt, welches ein Batteriezellvolumen von mehr als 50 % durch Bereitstellung von langgestreckten, rechteckigen, einzelnen Batteriezellen offenbart. Wie die einzelnen, prismatischen Batteriezellgehäuse hergestellt werden, wird nicht offenbart.

Hiervon ausgehend ist es Aufgabe der vorliegenden Erfindung, ein Batteriezellgehäuse anzugeben, welches sehr einfach gefertigt werden kann und gleichzeitig den Einsatz eines großen Spektrums an Aluminiumlegierungen sowie Gehäusedimensionen zulässt, um auf unterschiedliche Anforderungen des Batteriezellgehäuses, wie beispielsweise erhöhte Festigkeitsanforderungen, Wärmeleitfähigkeitsanforderungen oder Bauraumanforderungen, flexibel reagieren zu können. Darüber hinaus liegt der Erfindung die Aufgabe zu Grunde, ein Verfahren zur Herstellung des erfindungsgemäßen Batteriezellgehäuses vorzuschlagen.

Die oben genannte Aufgabe wird gemäß einer ersten Lehre der Erfindung dadurch gelöst, dass das Batteriezellgehäuse einen rollgeformten Rohrkörper aus einer Aluminiumlegierung als Batteriezellgehäusemantel aufweist, wobei der Batteriezellgehäusemantel in Längsrichtung, vorzugsweise form-, reib- und/oder stoffschlüssig, gefügt ist und zumindest bereichsweise einen rechteckigen Querschnitt aufweist, wobei der Batteriezellgehäusemantel vorzugsweise aus einem Aluminiumlegierungsband rollgeformt ist.

Als Längsrichtung des Batteriezellgehäusemantels wird hier die Achse des Rohrkörpers, welche sich senkrecht zum Rohrquerschnitt ergibt, bezeichnet. Indem der Batteriezellgehäusemantel aus rollgeformten und form-, reib- und/oder stoffschlüssig längsnahtgefügten Rohrköpern bereitgestellt wird, kann dieser aus den unterschiedlichsten Aluminiumlegierungen sehr präzise und in hoher Stückzahl hergestellt werden. Die Höhe und Breite des Batteriezellgehäusemantels ist dabei durch den Rollformprozess sehr präzise und gleichzeitig flexibel einstellbar. Die Länge des Batteriezellgehäusemantels, also die Erstreckung des Batteriezellgehäusemantels in Längsrichtung, kann durch ein Abteilen des rollgeformten Rohrkörpers auf Länge ebenfalls sehr variabel gewählt werden und sehr präzise Geometrien des Batteriezellgehäusemantels bereitstellen.

Der Rohrköper kann gegebenenfalls nach dem form-, reib- und/oder stoffschlüssigen Längsnahtfügen lackiert werden, um einen Batteriezellgehäusemantel mit lackierter Oberfläche bereitzustellen. Das Rollformen von lackierten Aluminiumbändern ist darüber hinaus möglich, um einen lackierten Batteriezellgehäusemantel zur Verfügung zu stellen. Diese haben den Vorteil, dass der Batteriezellgehäusemantel gegenüber dem Elektrodenwickel bzw. Elektrodenstapel beispielsweise elektrisch isoliert ausgeführt werden kann und darüber hinaus der Korrosionsschutz des Batteriezellgehäusemantels verbessert wird.

Als Fügeverfahren für die form-, reib- und/oder stoffschlüssige Verbindung in Längsrichtung kommen Schweißverfahren, wie das Metallinertgasschweißen (MIG-Schweißen), das Reibrührschweißen, das Laserschweißen oder InduktionsSchweißen, aber auch ein Löten, Kleben und Bördeln in Frage. Gemäß einer bevorzugten Ausführungsform ist der Batteriezellgehäusemantel längsnahtgeschweißt und weist eine Schweißnaht in Längsrichtung auf. Das Längsnahtschweißen von Rohrkörpern ist eine aus der Rohrherstellung bekannte Technologie, die hohe Schweißgeschwindigkeiten und eine qualitativ hochwertige Schweißnaht am Batteriezellgehäusemantel erzeugen kann. Das Längsnahtschweißen kann inline mit der Herstellung des Batteriezellgehäusemantels, beispielsweise nach dem Rollformen und vor dem Zuschneiden des Batteriezellgehäuses auf Länge erfolgen.

Um in Abhängigkeit von der gewählten Aluminiumlegierung die gewünschten Festigkeitsanforderungen des Batteriezellgehäuses zu erfüllen, beträgt gemäß einer weiteren Ausführungsform die Wanddicke des Batteriezellgehäusemantels bevorzugt 0,2 mm bis 1,2 mm. Aluminiumlegierungen mit höherer Festigkeit ermöglichen geringere Wanddicken mit größeren Innenvolumina. Diese erlauben wiederum die Optimierung der volumetrischen Energiedichte der Batteriezelle, da ein größerer Volumenanteil der Batteriezelle für Aktivmaterial zur Verfügung steht.

In einer weiteren Ausgestaltung des prismatischen Batteriezellgehäuses beträgt das Verhältnis von Höhe zu Breite des Batteriezellgehäusemantels mehr als 3 und weniger als 10, bevorzugt 5 bis 8. Das Verhältnis von Höhe zu Breite des Batteriezellgehäusemantels kann auf einfache Weise über einen Rollformprozess bereitgestellt werden.

Erfüllen gemäß einer nächsten Ausgestaltung des prismatischen Batteriezellgehäuses die Innenradien Rᵢ des Batteriezellgehäusemantels folgende Bedingung in Bezug auf die Dicke d des Aluminiumlegierungsbandes:
Rᵢ ≤ 2,5 ^{∗}d, bevorzugt Rᵢ ≤ 1,5 ^{∗}d oder besonders bevorzugt 0,1 ^{∗}d ≤ Rᵢ ≤ 1,5 ^{∗}d, so kann einerseits eine gute Stabilität des Batteriezellgehäuses erreicht werden und andererseits ein optimiertes inneres Volumen des Batteriezellgehäuses bereitgestellt werden, da ausreichend Platz für eine problemlose Anordnung eines Elektrodenwickels bzw. Elektrodenstapels der Batteriezelle zur Verfügung steht.

In einer weiteren Ausgestaltung des Batteriezellgehäuses weist der Batteriezellgehäusemantel mindestens ein Druckentlastungsmittel, vorzugsweise mindestens ein Berstelement und/oder Druckventil auf, welches das Batteriezellgehäuse vor einem Überschreiten eines kritischen Drucks im Inneren des Batteriezellgehäuses schützt. Das mindestens eine Druckentlastungsmittel kann vor, während oder nach dem Rollformprozess beispielsweise durch Lasern, Prägen, Stanzen, reib- und/oder stoffschlüssiges Einfügen in dem oder auf dem Batteriezellgehäusemantel eingebracht oder angeordnet werden. Das Druckentlastungsmittel kann bei einem Druckanstieg im Inneren des Batteriezellgehäuses auf beispielsweise mehr als 5 bar, bevorzugt mehr als 7,5 bar, auslösen, um einen weiteren Druckanstieg zu vermeiden und/oder den Druck zu verringern, um den kritischen Thermal-Runaway in der Batteriezelle zu vermeiden.

Bevorzugt ist eine Fügenaht, insbesondere eine Schweißnaht auf der Lang-Schmal-Fläche des Batteriezellgehäusemantels angeordnet. Mit der Lang-Schmal-Fläche ist die Seite des Batteriezellgehäusemantels gemeint, welche die kleinere Breite senkrecht zur Rollformrichtung, also der Längsrichtung des Batteriezellgehäusemantels aufweist. Hierdurch ergibt sich eine gute Fügbarkeit, respektive Schweißbarkeit des rollgeformten Rohrkörpers in Längsrichtung in Kombination mit einer vergleichsweise geringen mechanischen Belastung bei einem Druckanstieg während des Betriebs der Batterie oder im Schadensfall. Gleichzeitig erlaubt die Lang-Schmal-Fläche noch eine größere Maßtoleranz in Bezug auf die Ausbildung der Fügerespektive Schweißnaht ohne schädlich auf den Elektrodenwickel bzw. den Elektrodenstapel zu wirken.

Die Schweißbarkeit des rollgeformten Aluminiumlegierungsbands, insbesondere beim MIG-Schweißen oder Induktionsschweißen des rollgeformten Aluminiumlegierungsbands, wird dadurch verbessert, dass die Oberflächenspannung der Oberfläche des rollgeformten Aluminiumlegierungsbandes mehr als 30 mN/m bevorzugt mehr als 40 mN/m, insbesondere bevorzugt mehr als 50 mN/m, vorzugsweise unmittelbar vor dem Schweißen beträgt. Die Oberflächenspannung der Oberfläche des rollgeformten Aluminiumbandes kann beispielsweise unter Verwendung von Testtinten mit guter Genauigkeit gemessen werden. Hierzu wird das Aluminiumlegierungsband einer Entfettung oder einer Korona-Behandlung unter Verwendung eines Plasmas unterzogen. Dies kann beispielsweise inline mit der Herstellung des geschweißten Gehäusezellmantels erfolgen.

Vorzugsweise besteht der Batteriezellgehäusemantel aus einer Aluminiumlegierung mit folgender Zusammensetzung in Gew.-%:
Si < 0,5 %,
Fe < 0,8 %,
Cu < 0,5 %,
Mn ≤ 1,5 %,
Mg < 1,3 %, bevorzugt < 0,5 % oder 2,5 % < Mg < 6,0 %, bevorzugt 3,0 % < Mg < 6,0 % Cr < 0,2 %,
Zn < 0,25 %,
Ti ≤ 0,1 %, bevorzugt 0,001 % ≤ Ti ≤ 0,1 %,
Rest Al und unvermeidbare Verunreinigungen, einzeln maximal 0,05 % und in Summe maximal 0,15 %.

Aluminiumlegierungen mit der genannten Zusammensetzung lassen sich grundsätzlich gut rollformen und sind darüber hinaus schweißbar. Ferner können sie, beispielsweise abhängig vom Kupfer-, Mangan- oder Magnesiumgehalt, unterschiedlich hohe Festigkeitseigenschaften des Batteriezellgehäusemantels bereitstellen. Si-Gehalte von weniger als 0,5 Gew.-% ermöglichen eine geringe Heißrissneigung während des Schweißens des Batteriezellgehäusemantels. Fe-Gehalte von weniger als 0,8 Gew.-% erlauben zudem einen hohen Recycling-Anteil und binden weiterhin Si in Verbindung mit Mn und Al in AlMnFeSi-Phasen, was die Heißrissneigung während des Schweißens weiter reduziert. Cu-Gehalte von weniger als 0,5 Gew.-% erlauben die Ausnutzung der Festigkeit steigernden Wirkung von Kupfer ohne die Korrosionsbeständigkeit wesentlich zu verschlechtern. Darüber hinaus würden höhere Cu-Gehalte die Heißrissneigung verstärken. Mn-Gehalte von weniger als 1,5 -Gew.-%, vorzugsweise weniger als 1,2 Gew.-% ermöglichen eine präzise Kontrolle der Rekristallisation und der Textur durch die Bildung von Dispersoiden und steigern insbesondere die thermische Beständigkeit der Aluminiumlegierung. Darüber hinaus bildet Mn in Verbindung mit Fe und Si AlMnFeSi-Phasen, die den Si-Gehalt im Mischkristall senken und dadurch die Heißrissneigung reduzieren. Mg-Gehalte von weniger als 1,0 Gew.-%, bevorzugt weniger als 0,5 Gew.-%, resultiert eine moderate Festigkeitssteigerung bei geringer Heißrissneigung während des Schweißens. Cr-Gehalten von weniger als 0,2 Gew.-% sind zur Bildung von weiteren Dispersoid-Phasen geeignet, die wiederum die Mikrostruktur bei Temperaturbelastung stabilisieren. Durch Zn-Gehalte von weniger als 0,25 Gew.-% sowie Ti-Gehalte maximal 0,1 Gew.-% respektive von 0,001 Gew.-% bis maximal 0,1 Gew.-% wird der Einsatz von Recyclinglegierungen, insbesondere von Mn-haltigen Recyclinglegierungen, ermöglicht. Darüber hinaus ermöglicht der Ti-Gehalt von 0,001 Gew.-% bis 0,1 Gew.-% die Zugabe von Kornfeinungszusätzen auf Ti-Basis zur Optimierung des Gussgefüges. Durch die Begrenzung der unvermeidbaren Verunreinigungen auf einzeln maximal 0,05 Gew.-% und in Summe maximal 0,15 Gew.-% werden die positiven Effekte der Legierungsbestandteile nicht verändert.

Alternativ kann auch ein Mg-Gehalt von mehr als 2,5 Gew.-% und weniger als 6,0 Gew.-% bevorzugt mehr als 3,0 Gew.-% und weniger als 6,0 Gew.-% vorgesehen sein, um eine möglichst hohe Festigkeit des Batteriezellgehäusemantels bei minimaler Wanddicke und damit mit optimiertem Gewicht der prismatischen Batteriezelle sowie geringer Heißrissneigung während des Schweißens und somit hoher Prozesssicherheit bereitzustellen.

Stehen die Festigkeit und das Gewicht bei dem Batteriezellgehäuse nicht im Vordergrund, sondern eine möglichst gute Wärmeleitfähigkeit, dann ist es vorteilhaft, wenn der Batteriezellgehäusemantel aus einer Aluminiumlegierung vom Typ AAlxxx mit folgender Zusammensetzung in Gew.-% besteht:
Si < 0,25 %,
Fe < 0,4 %,
Cu < 0,2 %,
Mn ≤ 0,05 %,
Mg < 0,5 %,
Cr < 0,2 %,
Zn < 0,1 %,
0,001 % ≤ Ti ≤ 0,1 %,
Rest Al und unvermeidbare Verunreinigungen, einzeln maximal 0,05 % und in Summe maximal 0,15 %.

AAlxxx Aluminiumlegierungen, zum Beispiel vom Typ AA1050, sind sehr gut schweißbar, da der Anteil von Legierungselementen, die die Heißrissneigung erhöhen (Si, Cu, Mg), stark eingeschränkt ist. Darüber hinaus weisen diese Legierungen eine hohe Korrosionsbeständigkeit auf. Ferner stellen sie im walzharten Zustand H18 ausreichend hohe Festigkeiten bei gleichzeitig sehr hoher Wärmeleitfähigkeit bereit. Eine hohe Wärmeleitfähigkeit des Batteriezellgehäuses gewährleistet einen schnellen Wärmeabtransport aus dem Inneren der Batteriezelle und damit eine verbesserte Leistungsfähigkeit der Batteriezelle insbesondere im Falle hoher Lade- oder Entladeraten. Si-Gehalte von weniger als 0,25 Gew.-% sind zur Minimierung der Heißrissneigung im Schweißprozess zu bevorzugen. Fe-Gehalte von weniger als 0,4 Gew.-% erlauben den Einsatz von technisch reinem und auch industriellem Primärmetall, was aus Verfügbarkeits- und Kostengesichtspunkten zu bevorzugen ist. Cu-Gehalte von weniger als 0,2 Gew.-% ermöglichen das Legieren von Kupfer zur Festigkeitssteigerung durch Mischkristallbildung bei gleichzeitiger Minimierung der Heißrissneigung. Mn wirkt sich sowohl als gelöstes als auch in intermetallischen Phasen stark negativ auf die elektrische und die thermische Leitfähigkeit von Aluminiumlegierungen aus und ist deshalb auf weniger als 0,05 Gew.-% begrenzt. Mg trägt mittels Mischkristallhärtung insbesondere bei kaltverfestigten Zuständen zur Festigkeit bei. Allerdings nimmt die Heißrissneigung mit zunehmendem Mg-Gehalt zu, so dass der Mg-Gehalt auf < 0,5 Gew.-% beschränkt wird. Cr trägt als Dispersoidbildner zur Kontrolle der Mikrostruktur bei Erholungs- und Rekristallisationsprozessen sowie zur Stabilisierung der Mikrostruktur Temperaturbelastung bei. Allerdings beeinträchtigt Cr die elektrische und die thermische Leitfähigkeit, so dass der Cr-Gehalt auf weniger als 0,2 Gew.-% begrenzt ist. Zn beeinträchtigt die Korrosionsbeständigkeit und wird deshalb auf weniger als 0,1 Gew.-% begrenzt. Ti dient der Kornfeinung bzw. zur Optimierung des Gussgefüges während des Gießprozesses. Allerdings beeinträchtigt Ti die elektrische und thermische Leitfähigkeit vergleichsweise stark, so dass der Ti-Gehalt auf 0,001 Gew.% ≤ Ti ≤ 0,1 Gew.-% begrenzt ist.

Gemäß einer weiteren Ausgestaltung besteht der Batteriezellgehäusemantel aus einer Aluminiumlegierung vom Typ AA3xxx mit folgender Zusammensetzung in Gew.-%:
Si < 0,6 %,
Fe < 0,8 %,
Cu ≤ 0,5 %,
0,3 % ≤ Mn ≤ 1,5 %, bevorzugt 0,6 % ≤ Mn ≤ 1,2 %
Mg < 1,3 %, bevorzugt 0,8 % ≤ Mg ≤ 1,3 %, weiter bevorzugt 0,01 % < Mg < 0,5 % Cr < 0,2 %,
Zn < 0,25 %,
Ti ≤ 0,1 %, bevorzugt 0,001 Gew.-% ≤ Ti ≤ 0,1 Gew.-%,
Rest Al und unvermeidbare Verunreinigungen, einzeln maximal 0,05 % und in Summe maximal 0,15 %.

AA3xxx Aluminiumlegierungen, zum Beispiel vom Typ AA3003, stellen gegenüber AAlxxx Aluminiumlegierungen höhere maximale Festigkeiten, insbesondere höhere maximale Werte für die Streckgrenze R_{p0,2} bereit. Ein Silizium-Gehalt von Si von weniger als 0,6 Gew.-% führt in Kombination mit den erfindungsgemäßen Eisen- und Mangan-Gehalten in den angegebenen Mengen insbesondere zu relativ gleichförmig verteilten, kompakten Partikeln der quaternären α-Al(Fe,Mn)Si-Phase. Diese ausgeschiedenen Partikel steigern sowohl die Festigkeit der Aluminiumlegierung als auch deren elektrische und thermische Leitfähigkeit, da sie dem Mischkristall Eisen und Mangan entziehen, ohne jedoch andere Eigenschaften wie das Korrosionsverhalten, d.h. die Elektrolytbeständigkeit, oder die Umformbarkeit negativ zu beeinflussen. Der Eisen-Gehalt von weniger als 0,8 Gew.-% führt in Kombination mit dem erfindungsgemäßen Mangan-Gehalt in der angegebenen Menge zur Ausbildung von Al₆(Mn,Fe)-Phasen sowie, wie bereits oben ausgeführt, in Kombination mit den erfindungsgemäßen Silizium- und Mangan-Gehalten in den angegebenen Mengen zur Ausscheidung der Partikel der quaternären α-Al(Fe,Mn)Si-Phase. Dabei trägt Eisen zur Absenkung der Löslichkeit von Mangan in Aluminium bei, wodurch mehr Mangan in intermetallischen Phasen gebunden wird, was sich positiv auf die elektrische und thermische Leitfähigkeit auswirkt. Daneben beeinflussen die intermetallischen Phasen Erholungs- und Rekristallisationsvorgänge und verbessern die thermische Stabilität der mechanischen Eigenschaften. Eisen-Gehalte von mehr als 0,8 Gew.-% begünstigen die Bildung grober intermetallischer Phasen, die die Umformbarkeit im Tiefziehprozess beeinträchtigen können. Dadurch, dass ein Kupfer-Gehalt von maximal 0,5 Gew.-% zugelassen wird, kann die Festigkeit der Legierung durch Mischkristallbildung erhöht werden. Darüber hinaus wird eine erhöhte Toleranz der Aluminiumlegierung für kupferhaltige Aluminiumlegierungsschrotte erreicht, was die Realisierung hoher Recyclingmaterialanteile bei der Herstellung des Batteriegehäuses begünstigt. Nachdem zu hohe Kupfer-Gehalte sich jedoch negativ auf die Korrosionseigenschaften auswirken können, wird der Kupfer-Gehalt zur Erzielung einer ausreichend hohen Elektrolytbeständigkeit erfindungsgemäß auf höchstens 0,5 Gew.-% begrenzt. Der Mangan-Gehaltvon 0,3 Gew.-% ≤ Mn ≤ 1,5 Gew.-%, bevorzugt 0,6 Gew.-% ≤ Mn ≤ 1,2 Gew.-% führt, wie bereits oben ausgeführt, in Kombination mit den Silizium- und Eisen-Gehalten in den angegebenen Mengen zur Ausscheidung der Partikel der quaternären α-Al(Fe,Mn)Si-Phase sowie der Al₆(Mn,Fe)-Phase. Die intermetallischen Phasen behindern Erholungs- und Rekristallisationsvorhänge und verbessern somit die thermische Stabilität der mechanischen Eigenschaften. Mangan-Gehalte von weniger als 0,6 Gew.-% reduzieren die Festigkeitssteigerung durch Dispersoid- und Mischkristallhärtung bereits. Mn-Gehalte unterhalb von 0,3 Gew.-% führen zu einer unzureichenden Festigkeitssteigerung durch Dispersoid- und Mischkristallhärtung gegenüber den lxxx Legierung bei Verschlechterung der thermischen wie elektrischen Leitfähigkeit, während Mangan-Gehalte von mehr als 1,5 Gew.-%, insbesondere mehr als 1,2 Gew.-%, die Bildung von groben intermetallischen Phasen begünstigen, die sich ungünstig auf die Umformeigenschaften auswirken. Darüber hinaus reduzieren Mangan-Gehalte von mehr als 1,5 Gew.-%, insbesondere mehr als 1,2 Gew-%, die elektrische und thermische Leitfähigkeit des Batteriezellgehäuses so stark, dass das Thermomanagement ineffizient wird. Zur Erzielung verbesserter mechanischer Eigenschaften bei noch guter Schweißbarkeit wird der Magnesium-Gehalt in der genannten Ausführungsform auf weniger als 1,3 Gew.-%, bevorzugt 0,8 Gew.-% ≤ Mg ≤ 1,3 Gew.-%, weiter bevorzugt 0,01% < Mg < 0,5 %begrenzt. Die bevorzugten Bereiche stellen Kompromisse zwischen hoher Festigkeit, gutem Umformverhalten sowie hoher elektrischer und thermischer Leitfähigkeit bei gleichzeitig guter Schweißbarkeit und Recycling-Toleranz gegenüber Mg-haltigen Schrotten dar. Bei höheren Mg-Gehalten stehen dabei Festigkeit und Umformverhalten im Vordergrund bei etwas verringerter elektrischer und thermischer Leitfähigkeit. Bei niedrigeren Mg-Gehalten steht die elektrische und thermische Leitfähigkeit im Vordergrund bei verringerten Festigkeiten. Cr trägt als Dispersoidbildner zur Kontrolle der Mikrostruktur bei Erholungs- und Rekristallisationsprozessen sowie zur Stabilisierung der Mikrostruktur Temperaturbelastung bei. Allerdings beeinträchtigt Cr die elektrische und die thermische Leitfähigkeit, so dass der Cr-Gehalt auf weniger als 0,2 Gew.-% begrenzt ist. Zn beeinträchtigt die Korrosionsbeständigkeit und wird deshalb auf weniger als 0,25 Gew.-% begrenzt. Ti dient der Kornfeinung bzw. zur Optimierung des Gussgefüges während des Gießprozesses. Allerdings beeinträchtigt Ti die elektrische und thermische Leitfähigkeit vergleichsweise stark, so dass der Ti-Gehalt auf maximal 0,1 Gew.-%, bevorzugt auf 0,001 Gew.-% ≤ Ti ≤ 0,1 Gew.-% begrenzt ist. AA3xxx Aluminiumlegierungen sind daneben auch hoch umformbar und gut schweißbar sowie lötbar. Die genannten Obergrenzen für Silizium, Eisen, Kupfer, Magnesium, Chrom, Zink und Titan führen zu einer guten Eignung der Aluminiumlegierung zum Einsatz hoher Recyclinganteile in der Aluminiumlegierung von mindestens 70 % bis mehr als 90 %. Ausreichende Festigkeiten für den Batteriezellgehäusemantel werden zum Beispiel für Aluminiumlegierungen vom Typ AA3003 im Zustand H14 oder H16 bereits erreicht. Höher feste AA3xxx Aluminiumlegierungen, wie beispielsweise die AA3104, erzielen diese Eigenschaften ebenfalls bereits im Zustand H14.

Um noch höhere Festigkeiten bereitzustellen, besteht gemäß einer weiteren Ausgestaltung der Batteriezellgehäusemantel aus einer Aluminiumlegierung vom Typ AA5xxx aus folgender Zusammensetzung in Gew.-%:
Si < 0,3 %,
Fe < 0,4 %,
Cu < 0,2 %,
Mn < 0,8 %,
2,5 % < Mg < 6,0 %, bevorzugt 3,0 % < Mg < 6,0 %,
Cr < 0,2 %,
Zn < 0,25 %,
Ti ≤ 0,1 %, bevorzugt 0,001 % ≤ Ti ≤ 0,1 %,
Rest Al und unvermeidbare Verunreinigungen, einzeln maximal 0,05 % und in Summe maximal 0,15 %.

Batteriezellgehäusemäntel aus AA5xxx-Legierungen können aufgrund der hohen erzielbaren Festigkeiten anspruchsvolle Lastanforderungen erfüllen und damit beispielsweise als Strukturbauteil in Fahrzeugen berücksichtigt werden. Verantwortlich für den Anstieg der Festigkeiten ist der Mg-Gehalt von mehr als 2,5 Gew.-%, bevorzugt mehr als 3,0 Gew.-%. Bei diesen Mg-Gehalten ist darüber hinaus das Maximum der Heißrissneigung bereits überschritten, so dass Mg-Gehalte von mehr als 2,5 Gew.-%, bevorzugt mehr als 3,0 Gew.-% einen effizienten Schweißprozess ermöglichen. Bei mindestens 6,0 Gew.-% wird die Verarbeitung der Aluminiumlegierung durch Kaltwalzen zunehmend schwieriger, da die Verfestigung während des Kaltwalzens stark ansteigt und die Anfälligkeit für interkristalline Korrosion stark zunimmt. Si-Gehalte weniger als 0,3 Gew.-% sind zur Minimierung der Heißrissneigung im Schweißprozess und zur Vermeidung der Bildung von Mg2Si-Phasen, die dem Mischkristall Mg entziehen und somit die Mischkristallhärtung reduzieren, zu bevorzugen. Fe ist als Verunreinigung in industriellem Primärmetall sowie durch Recycling enthalten. Fe-Gehalte von weniger als 0,4 Gew.-% führen in Verbindung mit Mn-Gehalten von weniger als 0,8 Gew.-% zu einer Bildung von AlMnFe-Phasen, die als Dispersoide zur effizienten Kontrolle der Rekristallisation und Erholung beitragen und somit eine Optimierung des Korngefüges erlauben. Höhere Fe-Gehalte können zur Bildung von groben intermetallischen Phasen führen, während Mn-Gehalte oberhalb von 0,8 Gew.-% die thermisch wie elektrische Leitfähigkeit unerwünscht stark reduzieren. Cr trägt als Dispersoidbildner zur Kontrolle der Mikrostruktur bei Erholungs- und Rekristallisationsprozessen sowie zur Stabilisierung der Mikrostruktur Temperaturbelastung bei. Allerdings beeinträchtigt Cr die elektrische und die thermische Leitfähigkeit, so dass der Cr-Gehalt auf weniger als 0,2 Gew.-% begrenzt ist. Zn beeinträchtigt die Korrosionsbeständigkeit und wird deshalb auf weniger als 0,25 Gew.-% begrenzt. Ti dient der Kornfeinung bzw. zur Optimierung des Gussgefüges während des Gießprozesses. Allerdings reduziert Ti die elektrische und thermische Leitfähigkeit vergleichsweise stark, so dass der Ti-Gehalt auf maximal 0,1 Gew.-%, bevorzugt 0,001 Gew.-% ≤ Ti ≤ 0,1 Gew.-% begrenzt ist.

Damit Batteriezellgehäuse eine ausreichende Druckstabilität erreichen, ist eine ausreichend hohe Festigkeit des Batteriezellgehäusemantels erforderlich. Batteriezellgehäusemäntel aus rollgeformten Aluminiumlegierungsbändern bestehend aus dem Legierungstyp AA 5754 erreichen beispielsweise bereits im Zustand H12 ausreichende Festigkeiten. Werden Aluminiumlegierungsbänder bestehend aus einer Aluminiumlegierung vom Typ AA 5083 zur Herstellung des Batteriezellgehäusemantels verwendet, erreichen diese ausreichende Festigkeiten bereits im weichgeglühten Zustand O.

Weist das Aluminiumlegierungsband, aus dem der Batteriezellgehäusemantel des Batteriezellgehäuses rollgeformt ist, gemäß einer nächsten Ausgestaltung eine Streckgrenze R_{p0,2} von mindestens 120 MPa, vorzugsweise mindestens 150 MPa auf, ist gewährleistet, dass das Batteriezellgehäuse insbesondere in Bezug auf die Festigkeit des Batteriezellgehäusemantels eine ausreichende Druckstabilität erreicht, ohne dass eine zu große Wandstärke erforderlich wird, die die volumetrische Energiedichte der Batteriezelle signifikant herabsetzen würde.

Schließlich weist das Batteriezellgehäuse gemäß einer nächsten Ausgestaltung zwei mit dem Batteriezellgehäusemantel form-, reib- und/oder stoffschlüssig verbundene Deckel auf. Die Deckel können aus unterschiedlichsten Materialien bereitgestellt werden. Kunststoffe eigenen sich hierzu ebenso wie Keramikwerkstoffe oder auch gestanzte Aluminiumlegierungsbleche. Die Deckel können zur Ausbildung einer stoffschlüssigen Verbindung geklebt, verschweißt oder gelötet werden. Bei Deckeln aus Aluminiumlegierungen bietet sich zum Beispiel ein Laserschweißen oder Laserlöten an. Aber auch eine Bördelung zur form- und/oder reibschlüssigen Verbindung kommt bei Aluminiumwerkstoffen in Frage.

Die oben aufgezeigte Aufgabe wird zudem mit einem Verfahren zur Herstellung eines erfindungsgemäßen Batteriezellgehäuses dadurch gelöst, dass
- ein Aluminiumlegierungsband durch Warm- und/oder Kaltwalzen aus einem Barren oder einem Gießband hergestellt wird,
- das gewalzte Aluminiumlegierungsband mittels Rollformen und form-, reibund/oder stoffschlüssig Längsnahtfügen, insbesondere Längsnahtschweißen zu einem geschlossenen Rohr mit einem zumindest bereichsweise rechteckigem Querschnitt weiterverarbeitet wird, und
- das rollgeformte und gefügte Rohr senkrecht zu seiner Längsachse in kürzere Teilabschnitte, die als Batteriezellgehäusemantel verwendet werden, zerteilt wird.

Mit dem erfindungsgemäßen Verfahren lassen sich Batteriezellgehäuse mit zumindest bereichsweise rechteckigem Querschnitt auf einfache und wirtschaftliche Art und Weise herstellen, wobei grundsätzlich unterschiedliche Aluminiumlegierungen zum Einsatz kommen können, um verschiedene Anforderungen an die Batteriezellgehäuse erfüllen zu können.

Die Schweißgeschwindigkeit beim Längsnahtschweißen kann vorzugsweise mehr als 2,5 m/min, mehr als 5 m/min oder bevorzugt mehr als 10 m/min betragen. Durch Verwendung unterschiedlicher Aluminiumlegierungen, beispielsweise Aluminiumlegierungen vom Typ AAlxxx mit hoher Wärmeleitfähigkeit, über recyclingfreundliche Aluminiumlegierungen vom Typ AA3xxx bis zu hoch festen Aluminiumlegierungen vom Typ AA5xxx können mit dem gleichen Prozess Batteriezellgehäuse mit einem Batteriezellgehäusemantel mit zumindest bereichsweise rechtwinkligem Querschnitt hergestellt werden.

Bevorzugt wird gemäß einer ersten Ausführungsform des Verfahrens eine Nachbearbeitung der Schweißnahtwurzel zur Schweißnahtwurzelglättung durchgeführt. Hierdurch kann der Einfluss der Schweißnahtwurzel auf den Elektrodenwickel bzw. Elektrodenstapel der Batteriezelle weiter verringert werden. Dieser Verfahrensschritt kann unmittelbar im Anschluss an das Schweißen, insbesondere das Längsnahtschweißen, erfolgen. Eine Schweißnahtwurzelglättung kann beispielsweise durch ein erneutes Erwärmen der Schweißnaht mit einem Schweißstrahl im Wärmeleitungsmode erfolgen.

Gemäß einer weiteren Ausgestaltung des Verfahrens wird nach dem Zuschneiden des Batteriezellgehäusemantels auf die erforderliche Länge eine der beiden, bis dahin offenen Stirnseiten des Batteriezellgehäusemantels auf eine mit einem Deckel form-, reib- und/oder stoffschlüssige Weise verschlossen, um ein Batteriezellgehäuse in Form eines Bechers mit zumindest bereichsweise rechteckigem Querschnitt zur Aufnahme des Elektrodenwickels bzw. Elektrodenstapels bereitzustellen.

In diesen einseitig geschlossenen Becher kann dann in weiteren automatisierten Schritten ein Elektrodenwickel bzw. Elektrodenstapel eingeführt werden und die Befüllung mit Elektrolyt durchgeführt werden. Anschließend kann das Zellgehäuse mit einem zweiten Deckel auf form-, reib- und/oder stoffschlüssige Weise zu einer fertigen prismatischen Batterie verschlossen werden.

Alternativ kann der Elektrodenwickel bzw. der Elektrodenstapel zunächst in den Batteriezellgehäusemantel eingeführt werden, so dass eine besonders gute Zugänglichkeit der Fügezonen zum Verbinden der Elektrodenstapel mit den Terminals gewährleistet wird. Anschließend kann das Batteriezellgehäuse zunächst einseitig mit einem Deckel form-, reib- und/oder stoffschlüssig verschlossen werden, so dass ein Becher gebildet wird, der im weiteren Herstellungsprozess mit Elektrolyt gefüllt und danach mit dem zweiten Deckel form-, reib- und/oder stoffschlüssig verschlossen werden kann. Alternativ ist eine Befüllung mit Elektrolyt im Anschluss an das beidseitige form-, reibund/oder stoffschlüssige Verschließen des Batteriezellgehäuses durch den Deckel denkbar.

Die Erfindung soll im Weiteren anhand von Ausführungsbeispielen in Verbindung mit der Zeichnung näher erläutert werden. In der Zeichnung zeigt
- Fig. 1: in einer schematischen Darstellung ein Ausführungsbeispiel eines Batteriezellgehäusemantel eines prismatischen Batteriezellgehäuses,
- Fig. 2, Fig. 3: in einer schematischen Draufsicht zwei Deckel für das prismatische Batteriezellgehäuse aus Fig. 1 und
- Fig. 4: in einer schematischen Ansicht ein Ausführungsbeispiel eines erfindungsgemäßen Verfahrens zur Herstellung eines Batteriezellgehäuses.

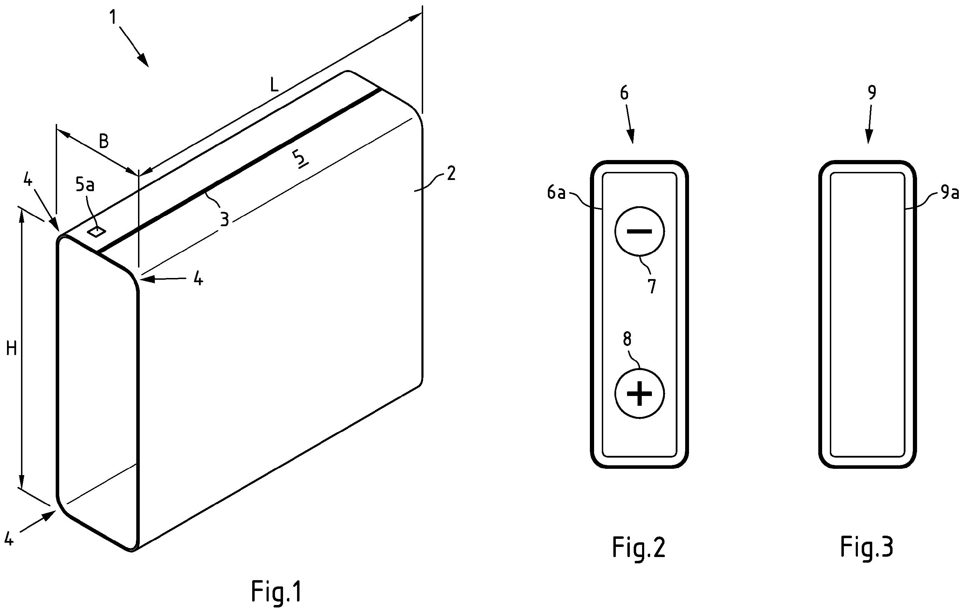

Fig. 1 zeigt in einem Ausführungsbeispiel einen Batteriezellengehäusemantel 1 eines Batteriezellgehäuses, welcher einen geschweißten, rollgeformten Rohrkörper mit einem, zumindest bereichsweise rechteckigem Querschnitt aufweist. Der Batteriezellgehäusemantel 1 ist aus einem Aluminiumlegierungsband 2 rollgeformt. Der Batteriezellgehäusemantel 1 des Ausführungsbeispiels ist form-, reib- und/oder stoffschlüssig längsnahtgefügt, vorliegend längsnahtgeschweißt. Die Schweißnaht 3 des Batteriezellgehäusemantels 1 ist im vorliegenden Ausführungsbeispiel auf der Lang-Schmal-Seite 5 des Batteriezellgehäusemantels vorgesehen.

Vorzugsweise beträgt die Wanddicke des Batteriezellgehäusemantels 0,2 mm bis 1,2 mm. Über die Wanddicke in Kombination mit der Auswahl einer Aluminiumlegierung lassen sich spezifische Eigenschaften des Batteriezellgehäusemantels 1 mit zumindest bereichsweise rechteckigem Querschnitt und damit für das entsprechende Batteriezellgehäuse bereitstellen.

Vorzugsweise weist die Aluminiumlegierung des Batteriezellgehäusemantels 1 die folgende Legierungszusammensetzung in Gew.-% auf:
Si < 0,5 %,
Fe < 0,8 %,
Cu < 0,5 %,
Mn ≤ 1,5 %,
Mg < 1,3 %, bevorzugt < 0,5 % oder 2,5 % < Mg < 6,0 %, bevorzugt 3,0 % < Mg < 6,0 % Cr < 0,2 %,
Zn < 0,25 %,
0,001 % < Ti < 0,1 %,
Rest Al und unvermeidbare Verunreinigungen, einzeln maximal 0,05 % und in Summe maximal 0,15 %.

Ferner kann der Batteriezellgehäusemantel 1 auch aus einer Aluminiumlegierung vom Typ AAlxxx mit folgender Zusammensetzung in Gew.-% bestehen:
Si < 0,25 %,
Fe < 0,4 %,
Cu < 0,2 %,
Mn ≤ 0,05 %,
Mg < 0,5 %,
Cr < 0,2 %,
Zn < 0,1 %,
0,001 % < Ti < 0,1 %,
Rest Al und unvermeidbare Verunreinigungen, einzeln maximal 0,05 % und in Summe maximal 0,15 %
   oder
aus einer Aluminiumlegierung vom Typ AA3xxx mit folgender Zusammensetzung in Gew.-%:
   Si < 0,6 %,
   Fe < 0,8 %,
   Cu ≤ 0,5 %,
   0,3 % ≤ Mn ≤ 1,5 %, bevorzugt 0,6 % ≤ Mn ≤ 1,2 %
   Mg < 1,3 %, bevorzugt 0,8 % ≤ Mg ≤ 1,3 %, weiter bevorzugt 0,01% < Mg < 0,5 %, Cr < 0,2 %,
   Zn < 0,25 %,
   0,001 % < Ti < 0,1 %,
   Rest Al und unvermeidbare Verunreinigungen, einzeln maximal 0,05 % und in Summe maximal 0,15 %.
      oder
   einer Aluminiumlegierung vom Typ AA5xxx mit folgender Zusammensetzung in Gew.-%:
      Si < 0,3 %,
      Fe < 0,4 %,
      Cu < 0,2 %,
      Mn < 0,8 %,
      2,5 % < Mg < 6,0 %, bevorzugt 3,0 % < Mg < 6,0 %,
      Cr < 0,2 %,
      Zn < 0,25 %,
      0,001 % < Ti < 0,1 %,
      Rest Al und unvermeidbare Verunreinigungen, einzeln maximal 0,05 % und in Summe maximal 0,15 %.

Aus Aluminiumbändern bestehend aus den oben genannten unterschiedlichen Aluminiumlegierungen lassen sich durch Rollformen Batteriezellgehäusemäntel 1 eines Batteriezellgehäuses herstellen. Die verschiedenen Zusammensetzungen der Aluminiumlegierungen ergeben dabei ein unterschiedliches Eigenschaftsprofil des Batteriezellgehäuses, respektive des Batteriezellgehäusemantels 1. So haben Alxxx Aluminiumlegierungen neben einer hohen Korrosionsbeständigkeit vor allem eine maximale Wärmeleitfähigkeit bei bevorzugten Werten für die Streckgrenze R_{p0,2} im walzharten Zustand H18 oder H19. AA3xxx-Aluminiumlegierungen weisen neben einer hohen Warmfestigkeit eine sehr gute Umformbarkeit sowie eine gute Schweißoder Lötbarkeit auf. Die recyclingfreundlichen AA3xxx-Aluminiumlegierungen erreichen bevorzugte Festigkeiten, insbesondere Streckgrenzwerte R_{p0,2} bereits in den Zuständen H14 und H16 und können bis zu mehr als 90 % aus recyceltem Aluminium bestehen. AA5xxx-Aluminiumlegierungen können bevorzugte Werte für die Streckgrenze R_{p0,2} gepaart mit einer hohen Duktilität bereits in den Zuständen O oder H12 bereitstellen. In diesen Gefüge-Zuständen oder auch Zuständen mit höherer Streckgrenze R_{p0,2} können bei AA5xxx Aluminiumlegierungen bei gleichzeitig hoher Duktilität besonders geringe Wanddicken für Batteriezellgehäusemäntel 1 verwendet werden und so zu einer Volumenoptimierung für den Elektrodenwickel bzw. Elektrodenstapel der Batteriezelle genutzt werden.

Die Länge des Batteriezellgehäusemantels L kann beispielsweise 100 mm bis 400 mm betragen. Größere Längen L sind auch vorstellbar und ohne Probleme über den rollgeformten Batteriezellgehäusemantel 1 bereitzustellen.

Gemäß dem in Fig. 1 dargestellten Ausführungsbeispiel kann das Verhältnis von Höhe H zu Breite B des Batteriezellgehäusemantels mehr als 3 und weniger als 10, bevorzugt 5 bis 8 betragen. Die Breite B kann dabei beispielsweise von 15 bis 45 mm, die Höhe H beispielsweise von 50 bis 200 mm variieren.

Bevorzugt weisen die Innenradien Rᵢ des Batteriezellgehäusemantels 1 in Bezug auf die Dicke jedes rollgeformten Aluminiumlegierungsbandes 2 das maximal das 2,5-Fache, maximal das 1,5-Fache oder maximal das 0,1-Fache bis zum 1,5-Fachen der Blechdicke d des Aluminiumbandes 2 auf.

Diese Innenradien Rᵢ führen zu einer hohen Packungsdichte und damit zu einer Optimierung der volumetrischen Energiedichte der Batteriezellen, welche mit den erfindungsgemäßen Batteriezellgehäusen erreicht werden kann, wobei gleichzeitig eine sichere Herstellung des Batteriezellgehäusemantels 1 durch Rollformen ermöglicht wird.

Die Schweißnaht ist, wie das Ausführungsbeispiel auch zeigt, vorzugsweise auf der Lang-Schmal-Fläche 5 des Batteriezellgehäusemantels 1 angeordnet, da diese Position eine geringe Belastung bei einem Anstieg des Innendrucks erfährt und für einen Längsnahtschweißprozess hinreichend gut zugänglich ist.

Auf der Lang-Schmal-Seite 5 ist vorzugsweise auch mindestens ein Druckentlastungsmittel, hier als Berstelement 5a dargestellt, vorgesehen. Das Berstelement 5a ist in Form einer Prägung oder Laserung ausgebildet. Das Material im Bereich des Berstelementes ist durch die Prägung ausgedünnt oder über einen Laser lokal in einen weichen Zustand derart überführt, um das Batteriezellgehäuse an dieser Stelle gezielt zu schwächen, so dass ab einem spezifischen inneren Druck die Druckstabilität lokal im Bereich des Berstelementes zugunsten seiner Umgebung reduziert ist. Bei unzulässig hohem Innendruck des Batteriezellgehäuses kann dieses gezielt entlastet werden, um im Fall des Auftretens des kritischen Thermal-Runaway ein unkontrolliertes Zerbersten des gesamten Batteriezellgehäuses zu verhindern und somit seine strukturelle Integrität weitestgehend aufrechtzuerhalten.

Das Aluminiumband des Batteriezellgehäusemantels 1 weist bevorzugt einen Wert für die Streckgrenze R_{p0,2} von mindestens 120 MPa, bevorzugt mehr als 150 MPa auf. Hierdurch wird gewährleistet, dass der Batteriezellgehäusemantel 1 eine sehr gute Druckstabilität, insbesondere Innendruckstabilität aufweist.

In Fig. 2 und Fig. 3 sind in einer Draufsicht der obere Deckel 6 und der untere Deckel 9 eines Batteriezellgehäuses, welches einen Batteriezellgehäusemantel 1 besitzt, schematisch dargestellt. Eine zusätzliche Prägelinie 6a bzw. 9a an den Deckeln 6 und 9 führt zu einer Aussteifung des Deckels des Batteriezellgehäuses und kann beispielsweise bei der Verwendung von Aluminiumlegierungen für die Herstellung der Deckel ohne Probleme eingebracht werden. Für die Durchführung der elektrischen Kontakte des Elektrodenwickels der Batteriezelle sind in dem Deckel in der Fig. 2 schematisch 2 Ausschnitte 7 und 8 vorgesehen, welche jeweils die Pole der Batteriezelle aufnehmen sollen. Die Pole sind mit einem Minus und einem Plus gekennzeichnet. Die Durchführung der elektrischen Kontakte kann einseitig über einen Deckel erfolgen. Alternativ kann jeweils ein elektrischer Kontakt über einen Deckel durchgeführt werden, so dass mehrere Batteriezellen an den jeweiligen Deckeln an den Rohrenden verschaltet werden können.

Die Deckel 6 und 9 können auf unterschiedliche oder auch gleichartige Weise form-, reib- und/oder stoffschlüssig mit dem Batteriezellgehäusemantel 1 verbunden werden, wobei sich verschiedene Fügetechniken wie Schweißen, Löten und/oder Kleben oder Kombinationen mehrerer Verbindungstechniken anbieten.

Zusätzlich kann über die Geometrie der Deckel eine rein reibschlüssige Verbindung oder eine Kombination von form-, reib- und/oder stoffschlüssiger Verbindung realisiert werden. Gleichzeitig kann aber auch ein rein formschlüssig mit dem Batteriezellgehäuse verbundener Deckel bereitgestellt werden, beispielsweise, wenn der Deckel 6 oder 9 mit einem Batteriezellgehäusemantel gebördelt wird. Darüber hinaus sind für die Deckel 6 und 9 des Batteriezellgehäuses auch die Verwendung unterschiedlicher Werkstoffe, wie beispielsweise Kunststoffe oder Keramiken, denkbar. Die Verbindungstechnik zur Verbindung des Batteriezellgehäusemantels 1 mit den Deckeln 6, 9 ist daher abhängig vom ausgewählten Werkstoff der Deckel.

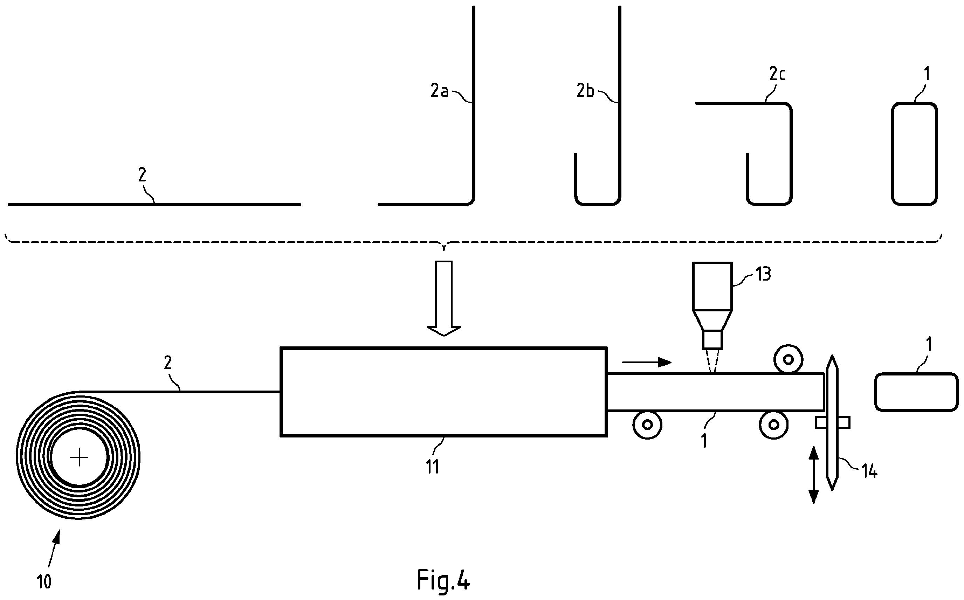

Fig. 4 zeigt nun in einer schematischen Darstellung ein Ausführungsbeispiel eines Verfahrens zur Herstellung eines Batteriezellgehäuses mit einem Batteriezellgehäusemantel mit zumindest bereichsweise rechteckigem Querschnitt, bei welchem ein Aluminiumlegierungsband aus einer Aluminiumlegierung durch Warm- und/oder Kaltwalzen aus einem Barren oder einem Gießband hergestellt wird, das gewalzte Aluminiumlegierungsband 2 zu einem rohrförmigen Batteriezellgehäusemantel 1 mit zumindest bereichsweise rechteckigem Querschnitt rollgeformt wird, der Batteriezellgehäusemantel 1 geschweißt und auf Länge zugeschnitten wird.

In Fig. 4 ist ein auf einem Coil 10 aufgewickeltes Aluminiumlegierungsband 2 schematisch dargestellt. Das Aluminiumlegierungsband 2 wird von diesem Aluminium Coil 10 abgewickelt und einer Rollformvorrichtung 11 zugeführt. In der Rollformvorrichtung 11 wird das Aluminiumlegierungsband 2 dann, wie Fig. 4 zeigt, beispielsweise in verschiedenen Teilschritten 2a, 2b, 2c zu einem Batteriezellgehäusemantel 1 mit rechteckigem Querschnitt rollgeformt. Am Ende des Rollformprozesses verlässt ein rohrförmiger Batteriezellgehäusemantel die Rollformvorrichtung 11.

Der rohrförmige Batteriezellgehäusemantel 1 mit rechteckigem Querschnitt verlässt die Rolle von Vorrichtung 11 und wird über Mittel zum Schweißen 13 längsnahtgeschweißt. Nicht dargestellt in Fig. 4 ist eine weitere Bearbeitung der Schweißnahtwurzel, zum Beispiel eine Schweißnahtglättung oder eine sonstige Nachbearbeitung der Schweißnaht. Ferner kann vor und/oder nach dem Längsnahtfügen, respektive -schweißen des Batteriezellgehäusemantels 1 durch eine Prägung mindestens ein Berstelement in den Batteriezellgehäusemantel 1 eingebracht werden. Über Mittel zum Zuschneiden 14 werden anschließend Batteriezellengehäusemäntel 1 mit festdefinierter Länge L abgetrennt.

Nicht dargestellt ist beispielsweise die Möglichkeit, den Batteriezellgehäusemantel 1 vor oder nach dem Schweißen zu lackieren. Alternativ können die hergestellten Batteriezellgehäusemantel 1 auch einer Stücklackierung zugeführt werden.

Nicht dargestellt ist in Fig. 4, dass nach dem Zuschneiden des Batteriezellgehäusemantels auf die erforderliche Länge eine der beiden offenen Stirnseiten des Batteriezellgehäusemantels mit einem Deckel form-, reib- und/oder stoffschlüssig verschlossen werden kann, um ein Batteriezellgehäuse in Form eines nun einseitig offenen Bechers mit zumindest bereichsweise rechteckigem Querschnitt zur Aufnahme des Elektrodenwickels bzw. Elektrodenstapels bereitzustellen, gefolgt von der Befüllung mit einem Elektrolyt. Nach dem Verschließen der anderen, bis dahin noch offenen, Seite des becherförmigen Batteriezellgehäuses inklusive des Bereitstellens der Anschlusspole der Batteriezelle steht eine fertige Batteriezelle mit zumindest bereichsweise einen rechteckigen Querschnitt aufweisenden Batteriezellgehäusemantel 1 zur Verfügung.

Alle zuvor beschriebenen Fertigungsschritte können hochautomatisiert durchgeführt werden und stellen eine wirtschaftliche Massenproduktion von Batteriezellgehäusemänteln 1 in unterschiedlichsten Formen und Längen bereit. Damit können Batteriezellgehäuse mit zumindest bereichsweise rechteckigem Querschnitt des Batteriezellgehäusemantels 1 für die unterschiedlichsten Anwendungen und mit unterschiedlichsten Eigenschaften in Bezug auf Festigkeit des Batteriezellgehäuses oder beispielsweise Wärmeleitfähigkeit des Batteriezellgehäuses auf wirtschaftlicher Art und Weise hergestellt werden.

## Patentansprüche

1. Batteriezellgehäuse,
**dadurch gekennzeichnet, dass**
das Batteriezellgehäuse einen rollgeformten Rohrkörper aus einer Aluminiumlegierung als Batteriezellgehäusemantel (1) aufweist, wobei der Batteriezellgehäusemantel (1) in Längsrichtung gefügt ist und zumindest bereichsweise einen rechteckigen Querschnitt aufweist, wobei der Batteriezellgehäusemantel (1) vorzugsweise aus einem Aluminiumlegierungsband (2) rollgeformt ist.

2. Batteriezellgehäuse nach Anspruch 1,
**dadurch gekennzeichnet, dass**
der Batteriezellgehäusemantel (1) längsnahtgeschweißt ist und eine Schweißnaht (3) in Längsrichtung aufweist.

3. Batteriezellgehäuse nach Anspruch 1 oder 2,
**dadurch gekennzeichnet, dass**
die Wanddicke des Batteriezellgehäusemantels (1) 0,2 mm bis 1,2 mm beträgt.

4. Batteriezellgehäuse nach einem der Ansprüche 1 bis 3,
**dadurch gekennzeichnet, dass**
das Verhältnis von Höhe (H) zu Breite (B) des Batteriezellgehäusemantels (1) mehr als 3 und weniger als 10, bevorzugt 5 bis 8 beträgt.

5. Batteriezellgehäuse nach einem der Ansprüche 1 bis 4,
**dadurch gekennzeichnet, dass**
die Innenradien Rᵢ des Batteriezellgehäusemantels (1) die folgende Bedingung in Bezug auf die Dicke d des rollgeformten Aluminiumlegierungsbandes (2) erfüllen: Rᵢ ≤ 2,5*d, bevorzugt, Rᵢ ≤ 1,5∗d, besonders bevorzugt 0,1∗d ≤ Rᵢ ≤ 1,5∗d.

6. Batteriezellgehäuse nach einem der Ansprüche 1 bis 5,
**dadurch gekennzeichnet, dass**
der Batteriezellgehäusemantel (1) mindestens ein Druckentlastungsmittel, vorzugsweise mindestens ein Berstelement (5a) und/oder mindestens ein Druckventil aufweist, welches das Batteriezellgehäuse vor einem Überschreiten eines kritischen Drucks im Inneren des Batteriezellgehäuses schützt.

7. Batteriezellgehäuse nach einem der Ansprüche 1 bis 6,
**dadurch gekennzeichnet, dass**
eine Fügenaht, insbesondere eine Schweißnaht (3) auf der Lang-Schmal-Fläche (5) des Batteriezellgehäusemantels (1) angeordnet ist.

8. Batteriezellgehäuse nach einem der Ansprüche 1 bis 7,
**dadurch gekennzeichnet, dass**
die Oberflächenspannung des Aluminiumlegierungsbandes (2), welches dem Rollformprozess zugeführt wird, mehr als 30 mN/m bevorzugt mehr als 40 mN/m, besonders bevorzugt mehr als 50 mN/m beträgt.

9. Batteriezellgehäuse nach einem der Ansprüche 1 bis 8,
**dadurch gekennzeichnet, dass**
der Batteriezellgehäusemantel (1) aus einer Aluminiumlegierung mit folgender Zusammensetzung in Gew.-% besteht:
Si < 0,5 %,
Fe < 0,8 %,
Cu < 0,5 %,
Mn ≤ 1,5 %,
Mg < 1,3 %, bevorzugt < 0,5 % oder 2,5 % < Mg < 6,0 %,
bevorzugt 3,0 % < Mg < 6,0 %,
Cr < 0,2 %,
Zn < 0,25 %,
Ti ≤ 0,1 %, bevorzugt 0,001 % ≤ Ti ≤ 0,1 %,
Rest Al und unvermeidbare Verunreinigungen, einzeln maximal 0,05 % und in Summe maximal 0,15 %.

10. Batteriezellgehäuse nach Anspruch 9,
**dadurch gekennzeichnet, dass**
der Batteriezellgehäusemantel (1) aus einer Aluminiumlegierung vom Typ AAlxxx mit folgender Zusammensetzung in Gew.-% besteht:
Si < 0,25 %,
Fe < 0,4 %,
Cu < 0,2 %,
Mn ≤ 0,05 %,
Mg < 0,5 %,
Cr < 0,2 %,
Zn < 0,1 %,
0,001 % ≤ Ti ≤ 0,1 %,
Rest Al und unvermeidbare Verunreinigungen, einzeln maximal 0,05 % und in Summe maximal 0,15 %.

11. Batteriezellgehäuse nach Anspruch 9,
**dadurch gekennzeichnet, dass**
der Batteriezellgehäusemantel (1) aus einer Aluminiumlegierung vom Typ AA3xxx mit folgender Zusammensetzung in Gew.-% besteht:
Si < 0,6 %,
Fe < 0,8 %,
Cu ≤ 0,5 %,
0,3 % ≤ Mn ≤ 1,5 %, bevorzugt 0,6 % ≤ Mn ≤ 1,2 %,
Mg < 1,3 %, bevorzugt 0,8 % ≤ Mg ≤ 1,3 %, weiter bevorzugt 0,01 % < Mg < 0,5 %,
Cr < 0,2 %,
Zn < 0,25 %,
Ti ≤ 0,1 %, bevorzugt 0,001 % ≤ Ti ≤ 0,1 %,
Rest Al und unvermeidbare Verunreinigungen, einzeln maximal 0,05 % und in Summe maximal 0,15 %.

12. Batteriezellgehäuse nach Anspruch 9,
**dadurch gekennzeichnet, dass**
der Batteriezellgehäusemantel (1) aus einer Aluminiumlegierung vom Typ AA5xxx mit folgender Zusammensetzung in Gew.-% besteht:
Si < 0,3 %,
Fe < 0,4 %,
Cu < 0,2 %,
Mn ≤ 0,8 %,
2,5 % < Mg < 6,0 %, bevorzugt 3,0% < Mg < 6,0 %,
Cr < 0,2 %,
Zn < 0,25 %,
Ti ≤ 0,1 %, bevorzugt 0,001 % ≤ Ti ≤ 0,1 %,
Rest Al und unvermeidbare Verunreinigungen, einzeln maximal 0,05 % und in Summe maximal 0,15 %.

13. Batteriezellgehäuse nach einem der Ansprüche 1 bis 12,
**dadurch gekennzeichnet, dass**
der Batteriezellgehäusemantel (1) mindestens eine Streckgrenze Rp_{0,2} nach DIN EN ISO 6892-1 von mindestens 120 MPa, bevorzugt mindestens 150 MPa aufweist.

14. Batteriezellgehäuse nach einem der Ansprüche 1 bis 13,
**dadurch gekennzeichnet, dass**
das Batteriezellgehäuse zwei mit dem Batteriezellgehäusemantel (1) form-, reibund/oder stoffschlüssig verbundene Deckel (6, 9) aufweist.

15. Verfahren zur Herstellung eines Batteriezellgehäuses nach Anspruch 1 bis 14, **dadurch gekennzeichnet, dass**
- ein Aluminiumlegierungsband (2) durch Warm- und/oder Kaltwalzen aus einem Barren oder einem Gießband hergestellt wird,
- das gewalzte Aluminiumlegierungsband (2) mittels Rollformen und Fügen in Längsrichtung, insbesondere Längsnahtschweißen zu einem geschlossenen Rohrkörper aus einer Aluminiumlegierung mit einem zumindest bereichsweise rechteckigem Querschnitt weiterverarbeitet wird, und
- der rollgeformte Rohrkörper senkrecht zu seiner Längsachse in kürzere Teilabschnitte, die als Batteriezellgehäusemantel (1) verwendet werden, zerteilt wird.

16. Verfahren Anspruch 15,
**dadurch gekennzeichnet, dass**
das Aluminiumlegierungsband (2) nach dem Rollformen längsnahtgeschweißt wird, wobei die Schweißgeschwindigkeit vorzugsweise mehr als 2,5 m/min, mehr als 5/min oder bevorzugt mehr als 10 m/min beträgt.

17. Verfahren Anspruch 15 oder 16,
**dadurch gekennzeichnet, dass**
eine Nachbearbeitung der Schweißnahtwurzel zur Schweißnahtwurzelglättung durchgeführt wird.

18. Verfahren nach einem der Ansprüche 15 bis 17,
**dadurch gekennzeichnet, dass**
nach dem Zuschneiden des Batteriezellgehäusemantels (1) auf die erforderliche Länge eine der beiden offenen Stirnseiten des Batteriezellgehäusemantels (1) mit einem Deckel (6a, 9a) form-, reib- und/oder stoffschlüssig verschlossen wird, um ein Batteriezellgehäuse in Form eines Bechers mit zumindest bereichsweise rechteckigem Querschnitt zur Aufnahme des Elektrodenwickels bzw. Elektrodenstapels bereitzustellen.
